Europäisches Patentamt

European Patent Office

Office européen des brevets

(11) Publication number: **0 440 821 A1**

# EUROPEAN PATENT APPLICATION
## published in accordance with Art. 158(3) EPC

(21) Application number: 90912948.8

(22) Date of filing: 31.08.90

(86) International application number:
PCT/JP90/01111

(87) International publication number:
WO 91/03723 (21.03.91 91/07)

(51) Int. Cl.⁵: **G01N 15/08**

(30) Priority: 31.08.89 JP 225859/89

(43) Date of publication of application:
14.08.91 Bulletin 91/33

(84) Designated Contracting States:
CH DE ES FR GB IT LI NL

(71) Applicant: NIKKISO CO., LTD.
No. 43-2, Ebisu 3-chome
Shibuya-ku Tokyo(JP)

(72) Inventor: TAKEUCHI, Minoru Nikkiso Company
Limited
43-2, Ebisu 3-chome
Shibuya-ku Tokyo 150-91(JP)

(74) Representative: TER MEER - MÜLLER -
STEINMEISTER & PARTNER
Mauerkircherstrasse 45
W-8000 München 80(DE)

(54) GAS FLOW PASSAGE CHANGEOVER DEVICE.

(57) This invention consists in a gas flow passage changeover device used in the surface area measurement apparatus, wherein, with the use of a rotary valve, the gas flow passage for degassing the sample cell by heating can be changed over to that for letting the sample in the sample cell adsorb gas for measurement without disconnecting the sample cell from the gas flow passage line.

EP 0 440 821 A1

## TECHNICAL FIELD

The present invention relates to a gas passage shifting device and, more particularly, to a gas passage shifting device so disposed in a surface area measuring device as to perform measuring operation in a more simple way.

## BACKGROUND TECHNOLOGY

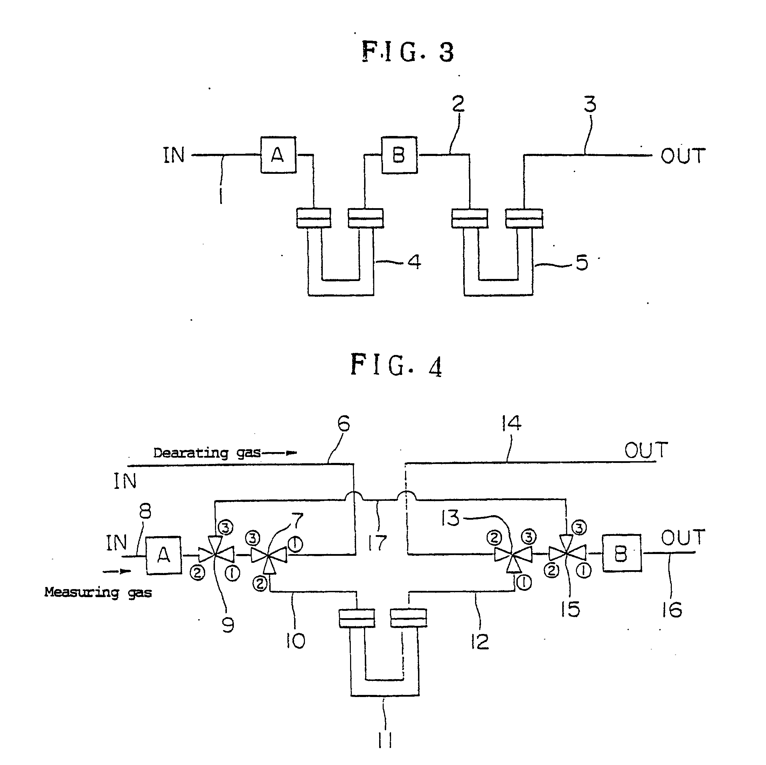

Heretofore, as shown in Fig. 3, conventional surface are a measuring device has a first pipe 1, a second pipe 2 and a third pipe 3 so disposed as to allow passage of gases to be adsorbed, first gas flow rate detecting means A disposed in an intermediate position of the first pipe 1, and second gas flow rate detecting means B in an intermediate position of the third pipe 3. Further, a U-shaped first sample cell 4 is detachably mounted between a top end portion of the first pipe 1 and a one end portion of the second pipe 2, while a U-shaped second sample cell 5 is detachably mounted between the other end portion of the second pipe 2 and a top end portion of the third pipe 3.

This conventional surface area measuring device is arranged to measure the surface area of a sample by the following operation.

More specifically, first, the sample is placed in the second sample cell 5 and, then, the sample cell 5 is mounted to the other end portion of the second pipe 2 and to the top end portion of the third pipe 3. Further, the first sample cell 4 is mounted to the top end portion of the first pipe 1 and to one end portion of the second pipe 2. In this state, deaerating gases are passed through the first pipe 1, the first sample cell 4, the second pipe 2, the second sample cell 5 and the third pipe 3, while the second sample cell 5 is heated at high temperatures. By passing the deaerating gases while heating the second sample cell 5, a minute quantity of water, adsorbing gases, etc. are removed from the sample within the second sample cell 5. After this deaerating operation has been continued for a predetermined period of time, the second sample cell 5 is removed from the second pipe 2 and the third pipe 3, and the second sample cell 5 is exchanged for the first sample cell 4 and mounted to the top end portion of the first pipe 1 and to the one end portion of the second pipe 2, while the first sample cell 4 is mounted to the other end portion of the second pipe 2 and to the top end portion of the third pipe 3. Thereafter, while the first sample cell 4 is cooled with liquid nitrogen, measuring gases composed of a mixture of an inert gas and nitrogen gas are passed from the first pipe 1 through the second sample cell 5, the second pipe 2, the first sample cell 4 and the third pipe 3, thereby allowing the nitrogen gas to be adsorbed on the sample.

While the nitrogen gas is being adsorbed on the sample, the flow rate of the gases to be detected by the first gas flow rate detecting means is larger than the flow rate of the gases to he detected by the second gas flow rate detecting means. As the adsorption of the nitrogen gas reaches its saturation, the flow rate of the gases to be detected by the first gas flow rate detecting means becomes substantially equal to the flow rate of the gases to be detected by the second gas flow rate detecting means. Then, the cooling of the second sample cell 5 is suspended and the second sample cell 5 is returned to room temperature while the mixed gases have been passed.

As the second sample cell 5 is being returned to ambient temperature, the nitrogen gas adsorbed on the sample starts desorbing therefrom and the flow rate of the gases to be detected by the second gas flow rate detecting means becomes larger than the flow rate of the gases to be detected by the first gas flow rate detecting means. Hence, the nitrogen gas adsorbed on the sample is measured by adding up the increasing gas flow rates detected by the second gas flow rate detecting means.

The surface area of the sample is then calculated from a total quantity of the nitrogen gas adsorbed on the sample.

However, the surface area measuring device having the structure as described hereinabove requires the operation of exchanging the second sample cell 5 for the first sample cell 4 in a piping system, so that the operation is made laborious and complex.

The reason for the requirements for exchanging the second sample cell 5 for the first sample cell 4 is because there are the heating means for allowing the gases absorbed on the sample in the sample cell to be desorbed and the cooling means for allowing the gases to be adsorbed on the sample within the sample cell.

Also, in addition to the second sample cell 5 which is filled with the sample, extra means for fully closing the piping system, for example, the first sample cell 4, is required, so that operating members are made larger and the operation is made inconvenient.

Hence, there is a surface area measuring device as will be described hereinafter, which does not require such an extra compornents as the first sample cell 4.

More specifically, as shown in Fig. 4, this surface area measuring device has the structure as will be described hereinafter. A deaerating gas pipe 6 is connected to a first three-way valve 7, a measuring gas pipe 8 is connected to the first three-way valve 7 through a first gas flow rate measuring means A and a second three-way valve 9. Further, the rest of the outlets of the first three-way valve 7 is connected to an inlet of a sample cell 11 through a pipe 10, while an outlet of the sample cell 11 is connected to a third three-way valve 13 through a pipe 12 and the rest of the third three-way valve 13 is connected to a first discharging pipe 14. Furthermore, the rest of the outlets of the third three-way valve 13 is connected to a second discharging pipe 16 through a fourth three-way valve 15 and the second gas flow rate measuring means B. And each of the rests of the outlets of the second three-way valve 9 and the fourth three-way valve 15 is connected to a pipe 17.

When the deaerating operation is performed using this surface area measuring device, as shown in Fig. 4, the outlet ① of the first three-way valve 7 is communicated with the outlet ② thereof, the outlet ② of the second three-way valve 9 is communicated with the outlet ③ thereof, the outlet ① of the third three-way valve 13 is communicated with the outlet ② thereof, and the outlet ① of the fourth three-way valve 15 is communicated with the outlet ③ thereof, thereby forming a gas passageway consisting of the deaerating gas pipe 6, the first three-way valve 7 ① / ② , the sample cell 11, the third three-way valve 13 ① / ② and the first discharging pipe 14. The deaerating gas is passed from the deaerating gas pipe 6 into the sample cell 11 filled with the sample. At this time, the measuring gases are passed through a gas passageway consisting of the first gas flow rate measuring means A, the second three-way valve 9 ② / ③ , the pipe 17, the fourth three-way valve 15 ③ / ① , the second gas flow rate measuring means B and the second discharging pipe 16. When the deaerating operation has been finished, the first, second, third and fourth three-way valves 7, 9, 13 and 15 are shifted, thereby forming a gas passageway for the measuring gases, which consists of the first gas flow rate measuring means A, the second three-way valve 9 ② / ① , the sample cell 11, the third three-way valve 13 ① / ③ , the fourth three-way valve 15 ② / ① , the second gas flow rate measuring means B, and the second discharging pipe 16. This gas passageway allows the measuring gases to be passed through the sample cell 11.

However, such a device as employing a number of three-way valves makes its operation for switching the three-way valves laborious and complicated, so that the device presents the problem that there is the risk of erroneously performing the switching operation with high probability.

## DISCLOSURE OF THE INVENTION

The present invention has been performed under the circumstances as described hereinabove.

More particularly, the object of the present invention is to provide a gas passage shifting device having a structure so simple that wrong operation is unlikely to be performed, which is so arranged as to shift the deaerating gas and the measuring gas with simple operation.

In order to solve the aforesaid problems, the present invention consists of a gas passage shifting device in a surface area measuring device for measuring a surface area or a specific surface area of a sample by measuring an amount of gases adsorbed on the sample from an amount of the gases supplied to a sample cell and an amount of the gases discharged from the sample cell after the sample cell containing the sample has been deaerated, a gas passage shifting device characterized by:

a first gas inlet connected to an one end of a first gas passage having first gas flow rate detecting means, a second gas inlet connected to a one end of a second gas passage connected at its other end to an outlet of the sample cell, a third gas inlet connected to a one end of a third gas passage having second gas flow rate detecting means, a first gas outlet connected to the other end of the third gas passage, a second gas outlet connected to a fourth gas passage discharging the gases, and a third gas outlet connected to a one end of a fifth gas passage connected at its other end to an inlet of the sample cell;

wherein, when the sample cell is deaerated, the first gas inlet is communicated with the first gas outlet, the second gas inlet is communicated with the second gas outlet, and the third gas inlet is communicated with the third gas outlet; and

when the gases are measured, the first gas inlet is communicated with the third gas outlet, the second gas inlet is communicated with the first gas outlet, and the third gas inlet is communicated with the second gas outlet.

In accordance with the present invention, there is employed one rotary valve which shifts its passages by the rotary operation.

In the deaerating operation, the rotary valve allows formation of one gas passageway consisting of the first gas passage, the first gas flow rate detecting means, the first gas inlet, the first gas outlet, the second gas flow rate detecting means, the second gas passage, the third gas inlet, the third gas outlet, the third gas passage, the sample cell, the fourth gas passage, the second gas inlet, the second gas outlet, and the fifth gas passage.

The deaerating operation is performed by passing the deaerating gas through this gas passageway.

After the deaerating operation has been finished, the rotary valve is rotated to thereby form another one gas passageway consisting of the first gas passage, the first gas flow rate detecting means, the first gas inlet, the third gas outlet, the third gas passage, the sample cell, the fourth gas passage, the second gas inlet, the second gas outlet, the second gas flow rate detecting means, the second gas passage, the third gas inlet, the third gas outlet, and the fifth gas passage.

The gases are adsorbed on the sample by passing the measuring gases through this gas passageway.

As described hereinabove, the mere rotation of the rotary valve can shift between the gas passageway for the deaerating gas and the gas passageway for the measuring gases.

Therefore, the present invention can assure a shift of the passageways without wrong operation.

BRIEF DESCRIPTION OF THE DRAWINGS

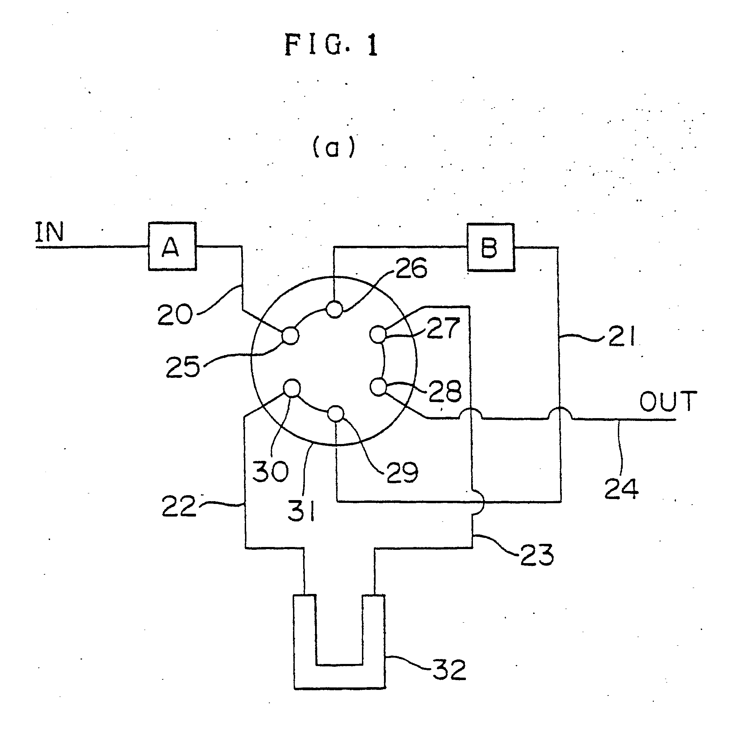

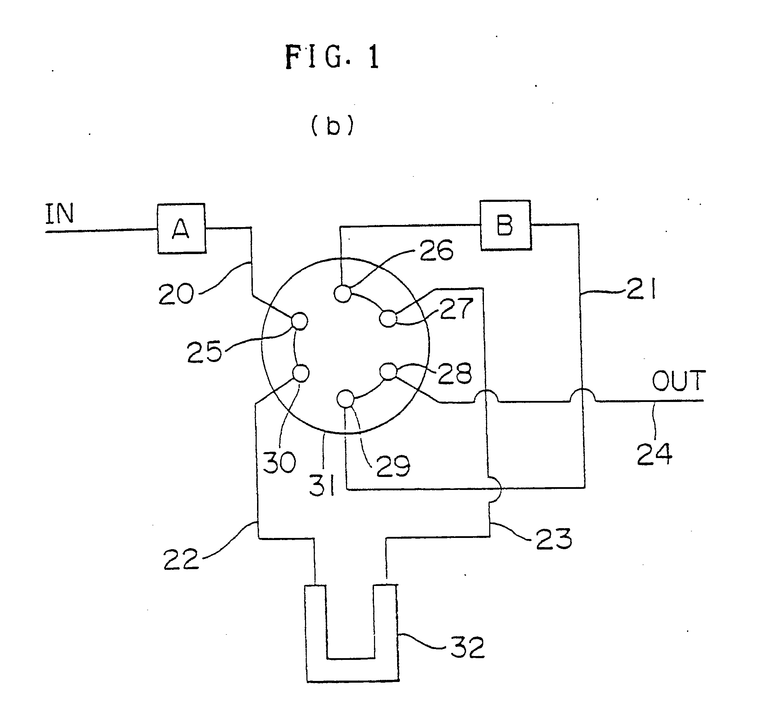

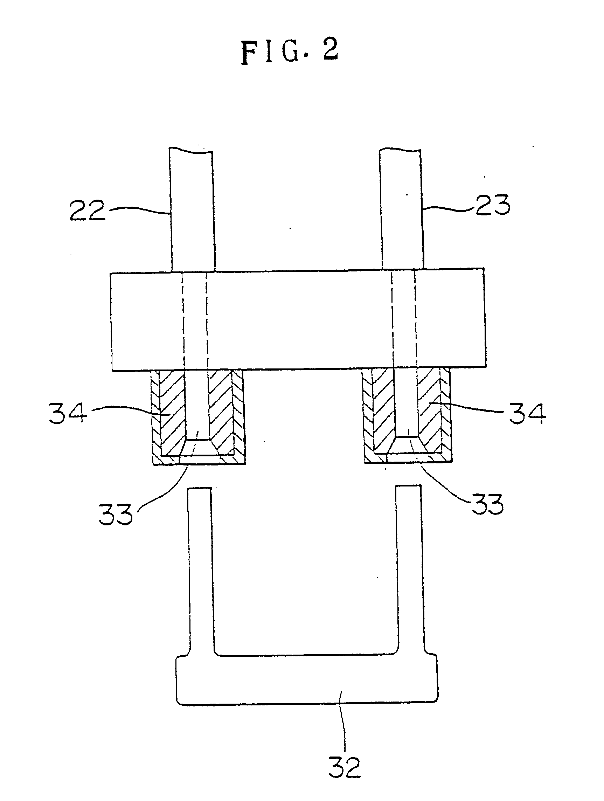

Fig. 1(a) is a diagrammatic representation showing the gas passage shifting device having a gas passageway formed at the time of deaerating operation, in accordance with an embodiment of the present invention. Fig. 1(b) is a diagrammatic representation showing the gas passage shifting device having a gas passageway formed when the measuring gases are passed, in accordance with an embodiment of the present invention. Fig. 2 is a diagrammatic representation showing a state of the sample cell mounted, in accordance with an embodiment of the present invention. Fig. 3 and Fig. 4 are a diagrammatic representation showing a conventional gas passage shifting device.

BEST MODES FOR CARRYING OUT THE INVENTION

The following is detailed description of the present invention by way of example thereof. It is to be noted herein that the present invention is not construed as being restricted to the embodiments which follow and it is to be understood as a matter of course that the present invention encompasses variants and modifications within the scope of the present invention.

This embodiment is directed to a gas passage shifting device incorporated in a surface area measuring device.

As shown in Fig. (a), the gas passage shifting device comprises a rotary valve 31 having a first gas passage 20, a second gas passage 21, a third gas passage 22, a fourth gas passage 23, a fifth gas passage 24, a first gas inlet 25, a first gas outlet 26, a second gas inlet 27, a second gas outlet 28, a third gas inlet 29 and a third gas outlet 30, first gas flow rate measuring means A and second gas flow rate measuring means B.

The first gas flow rate measuring means A is disposed in an intermediate position of the first gas passage 20, and an end portion of the first gas passage 20 is connected to the first gas inlet 25 of the rotary valve 31.

The second gas flow rate measuring means B is disposed in an intermediate position of the second gas passage 21, and a one end portion of the second gas passage 21 is connected to the first gas outlet 26 and the other end portion of the second gas passage 21 is connected to the second gas inlet 27.

A one end portion of the third gas passage 22 is connected to the third gas outlet 30 while the other end portion of the third gas passage 22 is connected to an inlet of the sample cell 32.

A one end portion of the fourth gas passage 23 is connected to an outlet of the sample cell 32, while the other end portion of the fourth gas passage 23 is connected to the second gas inlet 27.

A one end portion of the fifth gas passage 24 is connected to the second gas outlet 28.

As shown in Fig. 2, the sample cell 32 is connected to the third gas passage 22 and the fourth gas passage 23.

More specifically, the end portion of the third gas passage 22 is made of a member having lubricating properties and elasticity, such as silicone rubber, and a sealing member 34 having at its center a hole 33 through which the cell is mounted is disposed. Likewise, the end portion of the fourth gas passage 23 is made of a member having lubricating properties and elasticity, such as silicone rubber, and a sealing member 34 having at its center a hole 33 through which the cell is mounted is disposed. The two sealing members 34 are disposed and secured to be spaced apart from each other so as to be substantially equal to the length between the inlet and the outlet of the sample cell 32. The hole 33 through which the cell is mounted has an inner diameter slightly smaller than the outer diameter of the inlet of the sample cell 32.

By disposing each of the end portions of the third gas passage 22 and the fourth gas passage 23, the sample cell 32 can be mounted tightly to the third gas passage 22 and the fourth gas passage 23 by a one-touch operation. Hence, the mounting operation can be performed with extreme ease.

In the gas passage Shifting device having the aforesaid structure, the gas passage as shown in Fig. 1(a) is formed when the sample cell is subjected to deaerating operation by heating the sample cell with heating means such as a mantle heater. As no measurement is required by the first gas flow rate measuring means A and the second gas flow rate measuring means B during the deaerating operation, both of them is located on the upstream side of the sample cell 32.

When the measuring gases are passed through the sample in the sample cell in order to adsorb the measuring gases on the sample in the sample cell cooled by cooling means such as a Dewar flask filled with liquid nitrogen, the gas passageway is newly formed as shown in Fig. 1(b), by rotating the rotary valve 31.

As described hereinabove, the gas passageway can readily be formed merely by rotating the rotary valve 31.

Further, there may be employed, as the rotary valve 31, the one which has a conventionally per se known structure.

FIELD OF INDUSTRIAL UTILIZATION

The present invention can provide the gas passage shifting device with a simple structure having a smaller number of parts, which can be operated easily without causing the risk of wrong operation, because the passageway for the deaerating gas and the passageway for the measuring gases can readily be shifted by rotating the rotary valve.

Further, as the gas passage can be shifted readily by the rotary operation of the rotary valve, it is not required to remove the sample cell from the passageway, unlike conventional devices, thereby capable of solving laborious operation for removing the sample cells.

This gas passage shifting device can be applied to the surface area measuring device.

**Claims**

1. In a surface area measuring device for measuring a surface area or a specific surface area of a sample by measuring an amount of gases adsorbed on the sample from an amount of the gases supplied to a sample cell and an amount of the gases discharged from the sample cell after the sample cell containing the sample has been deaerated, a gas passage shifting device characterized by:

    a first gas inlet connected to an one end of a first gas passage having first gas flow rate detecting means, a second gas inlet connected to a one end of a second gas passage connected at its other end to an outlet of the sample cell, a third gas inlet connected to a one end of a third gas passage having second gas flow rate detecting means, a first gas outlet connected to the other end of the third gas passage, a second gas outlet connected to a fourth gas passage discharging the gases, and a third gas outlet connected to a one end of a fifth gas passage connected at its other end to an inlet of the sample cell;

    wherein, when the sample cell is deaerated, the first gas inlet is communicated with the first gas outlet, the second gas inlet is communicated with the second gas outlet, and the third gas inlet is communicated with the third gas outlet; and

    when the measuring actions are excuted, the first gas inlet is communicated with the third gas outlet, the second gas inlet is communicated with the first gas outlet, and the third gas inlet is communicated with the second gas outlet.

2. A gas passage shifting device as claimed in claim 1, wherein an end portion of the third gas passage is made of a member having lubricating properties and elasticity and provided with a sealing member having at its central portion a hole through which the sample cell is mounted; and an end portion of the fourth gas passage is made of a member having lubricating properties and elasticity and provided with a sealing member having at its central portion a hole through which the sample cell is mounted.

# F I G. 1

## (a)

# FIG. 1

## ( b )

# FIG. 2

# FIG. 3

# FIG. 4

# INTERNATIONAL SEARCH REPORT

## I. CLASSIFICATION OF SUBJECT MATTER (if several classification symbols apply, indicate all) 6

According to International Patent Classification (IPC) or to both National Classification and IPC

Int. Cl$^5$     G01N15/08

## II. FIELDS SEARCHED

Minimum Documentation Searched

| Classification System | Classification Symbols |
|---|---|
| IPC | G01N15/08 |

Documentation Searched other than Minimum Documentation
to the Extent that such Documents are Included in the Fields Searched 8

| | |
|---|---|
| Jitsuyo Shinan Koho | 1950 - 1990 |
| Kokai Jitsuyo Shinan Koho | 1971 - 1990 |

## III. DOCUMENTS CONSIDERED TO BE RELEVANT 9

| Category * | Citation of Document, with indication, where appropriate, of the relevant passages 12 | Relevant to Claim No. 13 |
|---|---|---|
| X | JP, A, 58-28650 (Ube Industries, Ltd.), 19 February 1983 (19. 02. 83), Pages 1 to 6 (Family: none) | 1, 2 |
| Y | JP, A, 62-106344 (Shimadzu Corp.), 16 May 1987 (16. 05. 87), Pages 1 to 4 (Family: none) | 1 |
| Y | JP, A, 62-167429 (Shimadzu Corp.), 23 July 1987 (23. 07. 87), Pages 1 to 3 (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance, the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| October 9, 1990 (09. 10. 90) | October 22, 1990 (22. 10. 90) |

| International Searching Authority | Signature of Authorized Officer |
|---|---|
| Japanese Patent Office | |

Form PCT ISA 210 (second sheet) (January 1985)